# EUROPEAN PATENT APPLICATION

(11) **EP 4 800 367 A1**
(43) Date of publication of application: **02.09.2026**
(21) Application number: 25160641.4
(22) Date of filing: 27.02.2025
(51) Int. Cl.: G01M 11/02, G01N 21/958

(54) **METHOD AND DEVICE OF ANOMALY DETECTION FOR A LENS**

(71) Applicant: Carl Zeiss Vision International GmbH, 73430 Aalen (DE)
(72) Inventor: SCHOEBEL, Daniel, 73430 Aalen (DE)
(74) Representative: Kraus & Lederer PartGmbB

(57) **Abstract**

A method of anomaly detection for a lens and a corresponding apparatus is provided. The detecting of an anomaly is based on a plurality of images of the lens illuminated with a pattern that is periodic in a modulation direction, wherein the pattern is phase-shifted from image to image. Phase progression rate for a plurality of positions on the lens are determined based on the plurality of images, and the anomaly is detected based on deviations between the phase progression rate for different positions on the lens.

## Description

The present application relates to methods, devices and computer programs for anomaly detection of a lens, for example an ophthalmic lens used for vision correction of a person, or an optical lens, not being an ophthalmic lens, used in consumer products such as lenses for microscopes, projectors, cameras or the like. Lenses, in particular ophthalmic lenses used for vision correction, but also optical lenses mentioned before, are usually tested for anomalies prior to their utilization. An anomaly is generally to be understood as a cosmetic deviation of a lens under examination from an expected optical behavior of the lens. "Cosmetic" refers to the fact that it does not relate to fundamental deviations of the optical design like refractive power, but to local flaws which may influence the local optical behavior. An anomaly may also be understood as a deviation of an actual lens surface under examination from a target lens surface within predetermined tolerances based on which the lens was manufactured. Such anomalies may include defects like opaque defects, for example dirt or stains on the lens, or transparent defects, for example scratches on the lens or coating defects in the substrate.

A method and device for detecting anomalies in optical components is known from US 2010/0290694 A1. According to this document, an optical component is illuminated with a structured pattern, and an image is captured. This is repeated with a phase-shifted pattern. Local phase and amplitude images of the optical component are calculated and compared to a model image of an anomaly-free optical component, which is determined based on an ideal model of the component.

For this approach, for each lens to be examined, a model is required. This increases the effort of testing. For example, ophthalmic lenses are often tailored to specific customers (for example, to the refraction error of the specific customer). In this case, for each lens a corresponding model is required for the anomaly detection.

It is therefore an object to provide improved possibilities for lens anomaly detection, where no model of the lens is required.

According to a first aspect, a method of anomaly detection for a lens (31) implemented by a processor is provided, the method comprising:
detecting an anomaly based on a plurality of images of the lens (31) illuminated with a pattern that is periodic in a modulation direction, wherein the pattern is phase-shifted from image to image.

The method is characterized in that the detecting of the anomaly comprises:
- determining phase progression rates for a plurality of positions on the lens (31) based on the plurality of images, and
- detecting the anomaly based on deviations between the phase progression rates for different positions on the lens.

The term processor refers to any device capable of processing the plurality of images as outlined above and also includes a plurality of computers, processor cores or processing systems communicating with each other, either in a unitary device or distributed and connected via a network.

The phase progression rate generally characterizes the change of phases, i.e. phase angles, between adjacent (directly adjacent or in a vicinity) positions on the lens relative to the modulation direction. Mathematically, the phase progression rate is the derivative of the phase angles with respect to the spatial distance in the modulation direction. In the context of the present application, also an approximation of this mathematical phase progression rate by difference quotients is referred to as phase progression rate. For such difference quotient, phase information, e.g. phase angles, of directly adjacent positions or spaced apart positions in the modulation direction may be used. Various possibilities for determining the phase progression rates will be explained further below.

The modulation direction is the direction in which the periodicity of the pattern occurs, i.e. a direction orthogonal to a direction where the phase is constant.

An image comprises a plurality of pixels (picture elements), the number of pixels depending on the resolution of the images. A resolution used may be between 10 and 100 Megapixels, for example 7000 x 7000 pixels equal to 49 Megapixels, but is not limited thereto. The images may be greyscale images, where each pixel records an intensity, e.g. coded in a number from 0 (dark) to a maximum number (white). The maximum number depends on the number of bits used for encoding the intensity of a pixel, e.g. 255 for 8 bits or 65535 for 16 bits. Images may also be recorded as color images and then converted to greyscale images.

Preferably determining the phase progression rates comprises determining phase information for a plurality of further positions in the plurality of images, and determining the phase progression rate for a position of the plurality of positions based on one or more differences between phase information for two or more further positions adjacent (immediately adjacent of in a vicinity) to the position in the modulation direction. The value of the phase progression rate may vary depending on the positions used for its calculation. However, as deviations between phase progression rates at different positions are used, this variation does not negatively affect the anomaly detection as long as the same calculation is used for all positions.

In other embodiments, no explicit step of determining the phase information is provided, and the phase progression rates are directly calculated based on the images. By using the phase information, phase progression rates may be calculated by simple arithmetic operations, examples for which will be given below, and the phase information may also be easily obtained from the plurality of images, as explained below.

The phase information in some embodiments may be filtered, for example using a median filter, prior to determining the phase progression rates, for example to reduce noise.

Phase information is also shortly referred to as phase herein and indicates the phase for the respective further position. The plurality of further positions may be the same as the plurality of positions, or one may be a subset of the other, or they may be different. In case the further positions are different from the positions, a phase progression rate for a position of the plurality of positions may be calculated based on phase information of further positions of the plurality of further positions adjacent to the specific position. For example, a phase progression rate calculated based on the difference between phase information of two directly adjacent positions may be seen as phase progression rate of a further position between the two directly adjacent positions, but may also be attributed to one of the two directly adjacent positions. As mentioned before, it is not necessary that the positions are directly adjacent, the positions may be in the vicinity, i. e. spaced apart by one or more pixels. Also, it is not necessary to consider positions in the direction of modulation, adjacent or in vicinity can hence refer to positions in any direction.

The phase information may be calculated in different ways. One approach is to perform a Fourier transformation, for example a discrete Fourier transform, using the plurality of images. The discrete Fourier transform may be performed over a number of images corresponding to an integer multiple of a full period of the periodic pattern, where the integer multiple may in particular be unity, such that the discrete Fourier transform is performed over a number of images corresponding to a full period of the periodic pattern. If the phase shift from image to image is equal to 2π/k, with k being an integer, the number of images corresponding to a full period of the periodic pattern is k. This results in a number of Fourier coefficients for each pixel, each Fourier coefficient being a complex number and associated with a respective frequency. From the Fourier coefficient associated with the modulation frequency of the pattern (inverse of the modulation period, given for example in pixels), the phase information may be calculated as the complex angle of the Fourier coefficient. An example calculation will be given below.

As an alternative, the phase information may also be calculated analytically without a Fourier transform, for example by phase shift analysis (PSA). Here, the known phase shift of the periodic pattern between the images, the form of the modulation and the pixel intensities of the images are used to calculate phase information for the pixels. An example calculation will be given below.

Preferably, determining the phase progression rates for the plurality of positions comprises calculating differences between matrices, each matrix being derived from a base matrix by shifting or corresponding to the base matrix, where the phase information for the plurality of further positions is arranged in rows and columns. Row number and column number indicate the further position. By using such matrix operations, the phase progression rates may be calculated efficiently, they enable calculation of the phase progression rates for the plurality of positions with matrix calculation operations implemented and optimized in many available libraries.

Preferably, detecting the anomaly based on deviations between the phase progression rates comprises calculating local variances of the phase progression rate, and detecting the anomaly if a variance of the local variances exceeds a first predefined threshold. The local variance is a variance (as commonly used in statistics) of phase progression rates at positions in a vicinity of a certain position of the plurality of positions for which the variance is calculated. By using variances, anomalies may be reliably detected.

The vicinity may include a predefined radius around the certain position or a predefined distance in the modulation direction from the certain position. The radius or distance may be selected based on a size of an anomaly to be detected. The vicinity may also include a predefined area or neighborhood around the respective position, such as defined by a convolutional kernel. Such convolutional kernels are commonly used in computer vision tasks and are matrices smaller than the image to be processed, which in computer vision is shifted across the input image and representing weights to calculate an output value for a target pixel based on a weighted sum of pixel values in its surrounding vicinity. In the present case, such convolutional kernels may also be used for filtering and processing the phase progression rates, where the input image are the phase progression rates of the respective positions, i.e. the phase progression rates are taken as pixel values of the image, while the positions are the image positions.

In case the vicinity comprises areas of varying PPR levels that are delimited by corners, the PPR can in embodiments be calculated using convolutional kernels, where the convolutional kernels are adapted to consider positions not in direction of modulation, but e. g. orthogonal to or in any angle with respect to the direction of modulation.

Additionally or alternatively, detecting the anomaly based on deviations between the phase progression rates comprises detecting an anomaly if a phase progression rate at a first position of the plurality of positions differs from one or more phase progression rates at second positions in the vicinity of the first position by more than a second predefined threshold, for example 10%.

In another alternative, detecting the anomaly based on deviations between the phase progression rates may include analyzing the phase progression rates by a trained machine learning logic. The machine learning logic may include a neural network like a convolutional neural network (CNN), may use deep learning techniques or another type of machine learning logic like a decision tree.

For training the machine learning data, a plurality of training lenses is used. Both anomaly-free training lenses and training lenses having one or more anomalies are preferably used.

In some instances, the training lenses may be real lenses. Anomalies may be determined by conventional means (for example inspection under a microscope), and phase progression rates may be determined by measurements using pattern as explained above. In other embodiments, the training lenses may be virtual lenses, and the phase progression rates may be obtained by simulations. In both cases, the training data includes phase progression rates (inputs to the machine learning logic) and associated anomalies (target output of the machine learning logic).

It should be noted that besides taking the phase progression rates directly as inputs for the machine learning logic, also information derived from the phase progression rates may be used. For example, the phase progression rates for all positions may be seen as an image (with the phase progression rates as pixel values for the respective positions), and this "image" may be used as input. Also, as will be explained below, phase progression rates may be determined for different modulation directions and combined, and such combined phase progression rates may also serve as inputs.

The method may further comprise repeating the steps of performing, obtaining and detecting at least once with a first modulation direction of the pattern to obtain first phase progression rates and at least once with a second modulation direction of the pattern different from, preferably perpendicular to, the first modulation direction to obtain second phase progression rates. In other words, in a repetition of the steps, the pattern is periodic in the first modulation direction, and for another repetition of the steps, the pattern is periodic in the second modulation direction. The phase progression rates used for the anomaly detection are then obtained by combining the first and second phase progression rates. This may increase the likelihood of anomaly detection also for anomalies which are aligned with the first modulation direction so that they are hard to detect using only a pattern having the first modulation direction.

The combining of the first phase progression rates and the second phase progression rates may be performed by calculating the square root of the sums of the squares of the first and second phase progression rates. Other mathematical combinations like median, arithmetic mean or geometric mean may also be used.

In a preferred embodiment, combining the first phase progression rates and the second phase progression rates comprises determining the phase progression rates as vectors with the first phase progression rate as first vector component and the second phase progression rate as second vector component. The different first and second modulation directions means that they are linearly independent, such that the resulting first and second phase progression rates can be seen as linearly independent vector components (a linear dependence could only be present of the first and second directions were the same, i.e. an angle of 0°/180° between the modulation directions). The vectors may also be represented in polar coordinates with angle and magnitude. In this case, detecting the anomaly based on deviations between the phase progression rates comprises detecting the anomaly based on deviations between at least one of the group consisting of a magnitudes of the vectors of the phase progression rates and angles of the vectors of the phase progression rates. By evaluating both magnitude and angle of the vectors, anomaly detection may be improved. The vectors may also be analyzed using vector analysis methods, for example by detecting rotations of vectors of adjacent positions above a threshold or by detecting and analyzing vector divergences. In other embodiments, machine learning techniques as already explained above may be used, where in this case the vectors (either with the first and second phase progression rates as vector components or expressed as angle and magnitude) are used as input. Training may be performed with corresponding training data as explained above.

Therefore, scalar values or vector values of phase progression rates may be evaluated, which may be taken as isolated values or e.g. represented as an image. The evaluation may be performed in various ways, for example by analytical methods, based on machine learning approaches, or the like.

Phase shifts between two images having adjacent phase shifts may be π/4, i. e. 45°. This may on the one hand give a good coverage of different phases and on the other hand does not require too many images, for example in this case, eight images to cover a complete period of the periodicity. However, in other embodiments, other phase shifts may be used, which preferably may be 2π/N, where N is an integer greater than 1.

The periodic modulation of the pattern may be a sine-like modulation. "Sine-like" covers both a modulation corresponding to a sine as well as phase-shifted versions thereof, for example a cosine modulation. Furthermore, it is to be understood that when using device to generate the pattern, deviations from an ideal mathematical sine function occur. For example, the pattern may be generated by a display having a fixed number of light intensity levels, similar to what was explained for the images above, for example coded with a certain bit width like 8 bits or 16 bits. In this case, the pattern is quantized corresponding to the bit width. Also, such a quantized pattern is to be understood as a sine-like pattern. In other embodiments, other periodic modulations may be used, for **example harmonic** modulations. For a good evaluation of phase progression rates, the modulation function preferably is continuously differentiable. For example, instead of a sine-like modulation, wavelets, polynomial base functions, Legendre polynomials or Zernike polynomials may be used. It should be noted that as for an illumination the lowest value is 0 (no illumination intensity), a sine like pattern generated by an illumination source like a display will not oscillate around zero (as a mathematical sine function does), but about a value greater than 0. This is also covered by the term sine-like modulation.

To further illustrate this, phase shifts of π/4 between adjacent images, and the discrete Fourier transform is performed over one full period, i. e. over eight images, will be used as an illustrative example for the explanations below. The approach discussed below, however, may also applied to other phase shifts, resulting in a different number of images for a complete period.

The eight images may be seen as a three-dimensional tensor, with the first two dimensions being the matrix of pixel values of the images and the third dimension spanning across the eight images, i. e. the first and second dimensions give the resolutions of the images and the third dimension would be 8 in this example. For each pixel, i.e. each element in the two-dimensional grid of the first two dimensions of the tensor, then an 8-point discrete Fourier transform is calculated for every single pixel over the images, i.e. along the third dimension of the tensor. This operation yields a tensor of complex numbers, the Fourier coefficients, where again the first two dimensions correspond to the pixel coordinates in the images and the third dimension now corresponds to the Fourier coefficients. From these layers in the third dimension, i.e. the Fourier coefficients, as mentioned above those corresponding to the frequency of the modulation of the pattern, are selected for further processing. In other words, if a Fourier coefficient *zₙ* for a particular position is ${z}_{n} = \frac{1}{N} {\sum }_{k = 0}^{N - 1} {a}_{k} {e}^{- 2 πi \frac{kn}{N}}$, where Nis the number of images (N in this example) and n is the "number" of the Fourier coefficient, the coefficient for n=1. This coefficient will be simply designated z, without the subscript 1, in the following.

The Fourier coefficients each are complex numbers *z=a+bi,* where *a is* the real part, *b* is the imaginary part and *i* is the imaginary unit. A phase *ϕ* for each pixel can then be calculated as phase information according to *ϕ* = *atan2*(*b*/*a*), with the phase in the range from -*π* to *π,* and *atan* being the arc tangent function. *ϕ* quantifies the phase angle of the frequency component the Fourier coefficients evaluated belong to. By evaluating the change of phase angles, that is the phase progression rates, in their spatial embeddings of surrounding Fourier coefficients and corresponding phase angles, i.e. of surrounding pixels, anomalies may be detected.

Assuming that the pattern is periodically modulated in an x-direction and constant in a y-direction perpendicular to the x-direction, the phase progression rate *v_{yi}* for a certain x-position is expected to be at least approximately constant, i.e. $\frac{\partial ϕ \left(x, {y}_{i}\right)}{\partial x} = const . {=}^{def} {v}_{yi} ∀ {y}_{i} ∈ \left[0, {y}_{max}\right]$

However, if anomalies occur this value may not be constant for *yᵢ,* i.e. all y coordinates between 0 and *yₘₐₓ.*

Therefore, the evaluation of the phase progression rates *v_{yi}* may be used to evaluate anomalies.

For approximation, the derivative of equation (1) above in one embodiment may be replaced by a difference of phase values *ϕ* for adjacent pixels to obtain an approximate phase progression rate *ṽ(yᵢ)* according to ${\left.\frac{\partial ϕ \left(x, {y}_{i}\right)}{\partial x}\right|}_{x = {x}_{n}} \approx ϕ \left({x}_{n + 1}, {y}_{i}\right) - ϕ \left({x}_{n}, {y}_{i}\right) {=}^{def} {{v}^{˜}}_{{y}_{i}} \left({x}_{n}\right) ∀ {y}_{i} ∈ \left[0, {y}_{max}\right]$

Here, *xₙ* is the pixel position in x-direction for which the derivative is approximated, i.e. as an approximation for phase progression rate the difference between two adjacent pixels is taken. It should be noted that the phase progression rate according to equation (2) may also be taken as a phase progression rate for a further position at (*xₙ₊₁+xₙ)*/*2,* i.e. between the two directly adjacent positions *xₙ* and *xₙ₊₁.*

This can be written in vector notation by using column vectors according to $\vec{{X}_{n}} = \left〈ϕ\left({x}_{n}, 0\right),…,ϕ\left({x}_{n}, {y}_{max}\right)\right〉$ where *̅X̅ₙ̅*̅ is the column vector. A vector *̅V̅*̅(*xₙ*) for the phase progression rate approximations of equation (2) can be written as $\vec{V} \left({x}_{n}\right) = \vec{{X}_{n + 1}} - \vec{{X}_{n}}$

Such a vector *̅V̅*̅(*xₙ*) which comprises the phase progression rates for a particular column may then be evaluated as mentioned above. For efficient calculation of the vectors *̅V̅*̅(*xₙ*) the vectors *̅X̅ₙ̅*̅ of equation (3) above may be written as two matrices *M*₁and *M*₂ according to where the element of matrix *M*₂ are shifted one position to the left compared to *M*₁*.*

Then, *̅V̅*̅(*xₙ*) may be summarized to a matrix V according to ${{V}_{¯}}_{¯} = {{{M}_{2}}_{¯}}_{¯} - {{{M}_{1}}_{¯}}_{¯}$

Matrix subtractions as in equation (5) are implemented in many available libraries, and moreover *M*₂ may be calculated from *M*₁ through circular shifting of arrays, which are also implemented in many libraries, for example, without loss of generality, the circshift function as follows: ${{{M}_{2}}_{¯}}_{¯} = circshift \left({{{M}_{1}}_{¯}}_{¯},\vec{x},-1\right)$

This is an example for the calculation of differences between matrices mentioned above. When calculated in this way, the phase progression rates in matrix form according to equation (5) may include unsteady jumps due to the output of the arc tangent function used for calculating the phase angles φ as above based on the Fourier coefficients is in the range from -π to π and may therefore jump from -π to π. To compensate this, corrected values *ṽ_{yi}*(*xₙ*)_{corrected} may be used in the above matrix according to ${{v}^{˜}}_{{y}_{i}} {\left({x}_{n}\right)}_{corrected} = \left\{\begin{matrix}{{v}^{˜}}_{{y}_{i}} \left({x}_{n}\right) : - π < ϕ \left({x}_{n + 1}, {y}_{i}\right) - ϕ \left({x}_{n}, {y}_{i}\right) < π \\ {{v}^{˜}}_{{y}_{i}} \left({x}_{n}\right) + 2 π : ϕ \left({x}_{n + 1}, {y}_{i}\right) - ϕ \left({x}_{n}, {y}_{i}\right) < - π \\ {{v}^{˜}}_{{y}_{i}} \left({x}_{n}\right) - 2 π : ϕ \left({x}_{n + 1}, {y}_{i}\right) - ϕ \left({x}_{n}, {y}_{i}\right) > π\end{matrix}\right.$

As mentioned above, the steps may be repeated with a first modulation direction and a second modulation direction, which essentially corresponds to a coordinate transformation of swapping the x axis and y axis to obtain x' axis and y' axis, for example according to $\left[\begin{matrix}x ′ \\ y ′\end{matrix}\right] = \left[\begin{matrix}y \\ x\end{matrix}\right] = \left[\begin{matrix}0 & 1 \\ 1 & 0\end{matrix}\right] \left[\begin{matrix}x \\ y\end{matrix}\right]$

For the second modulation direction, in the same way as explained above for matrix *V* including the velocities *v_{yi}* in the x direction, with a modulation in the y direction a corresponding phase progression rate matrix W may be calculated for phase progression rates *w_{xᵢ}* in the same way as explained above. In particular, the same approximations (in particular, equation (2) above) may be used. For common evaluation, then a single-phase progression rate map P may be obtained according to ${{P}_{¯}}_{¯} ∈ {ℝ}^{m \times n} : {p}_{{m}_{i} , {n}_{i}} = \sqrt{{\left({v}_{{m}_{i} , {n}_{i}}\right)}^{2} + {\left({w}_{{m}_{i} , {n}_{i}}\right)}^{2}}$ where *v*_{*m*ᵢ,*n*ᵢ} and *w*_{*m*ᵢ,*n*ᵢ} are the respective elements of matrices *V* and *W.*

The matrix P may also be displayed as an image, where the matrix values correspond to pixel intensities, which allows for a visual detection of the anomalies.

As mentioned above, in addition to the magnitudes as in equation (9), also an angle matrix *A* for vector angles may be calculated according to ${{A}_{_}}_{_} ∈ {ℝ}^{m \times n} : {a}_{{m}_{i} , {n}_{i}} = {cos}^{- 1} \left(\frac{{v}_{{m}_{i} , {n}_{i}}}{{p}_{{m}_{i} , {n}_{i}}}\right)$

Instead of *v_{mᵢ,nᵢ}* in the numerator above, also *w*_{*m*ᵢ,*n*ᵢ} may be used, which changes the frame of reference for the angles.

The angles may be evaluated in addition to the magnitudes, or the vectors defined by the angles and magnitudes (or the two components *v*_{*m*ᵢ,*n*ᵢ} and *w*_{*m*ᵢ,*n*ᵢ}) may be evaluated using vector analysis.

If instead of the discrete Fourier transform a direct calculation of the phase information is used, based on this directly calculated phase information the same approach as above for calculating the phase progression rates may be used. An example for such a direct calculation will now be given for the case of four images having a sine-like modulation (expressed as cosine function below), where a phase shift of *π*/2=90° between images is used. In this case, for a pixel position x, y the image intensities for four images I₁, I₂, I₃ and I₄ may be written as ${I}_{1} \left(x, y\right) = {I}_{a} \left(x, y\right) + {I}_{m} \left(x, y\right) cos \left[ϕ\left(x, y\right)\right]$ ${I}_{2} \left(x, y\right) = {I}_{a} \left(x, y\right) + {I}_{m} \left(x, y\right) cos \left[ϕ\left(x, y\right)+π/2\right]$ ${I}_{3} \left(x, y\right) = {I}_{a} \left(x, y\right) + {I}_{m} \left(x, y\right) cos \left[ϕ\left(x, y\right)+π\right]$ ${I}_{4} \left(x, y\right) = {I}_{a} \left(x, y\right) + {I}_{m} \left(x, y\right) cos \left[ϕ\left(x, y\right)+3π/2\right]$ where *Iₐ*(*x, y*) represents the average intensity of the images at pixel position x, y, *Iₘ*(*x, y*) is the amplitude of the modulation and *ϕ*(*x, y*) is the phase angle used as phase information. Using trigonometric relationships between sine and cosine, from equations (11) to (14) the phase *ϕ*(*x, y*) may be calculated as: $ϕ \left(x, y\right) = \frac{{I}_{4} \left(x, y\right) - {I}_{2} \left(x, y\right)}{{I}_{1} \left(x, y\right) - {I}_{3} \left(x, y\right)}$

**It should** be noted that the phase information calculated in this way due to the periodicity of the cosine function is ambiguous by multiples of 2*π*. However, as phase progression rates are used for anomaly detection and not the phase information directly, this ambiguity does not negatively affect the anomaly detection. Therefore, no reconstruction of the absolute phase angle (without the ambiguity), also referred to as phase unwrapping, is required. However, also with the direct calculation of the phase angles of equation (15), discontinuities in the resulting phase progression rates are advantageously compensated, as explained with reference to equation (7) above.

Instead of equation (2), in other embodiments other ways may be used to calculate *ṽ_{yᵢ}*(*xₙ*). For example, *ṽ_{yᵢ}*(*xₙ*) may be calculated according to: ${{v}^{˜}}_{{y}_{i}} \left({x}_{n}\right) = \left(ϕ\left({x}_{n + h}, {y}_{i}\right)-ϕ\left({x}_{n - h}, {y}_{i}\right)\right) / 2 h ∀ {y}_{i}$ or ${{v}^{˜}}_{{y}_{i}} \left({x}_{n}\right) = \left(-ϕ\left({x}_{n + 2 h}, {y}_{i}\right)+8ϕ\left({x}_{n + h}, {y}_{i}\right)-8ϕ\left({x}_{n - h}, {y}_{i}\right)+ϕ\left({x}_{n - 2 h}, {y}_{i}\right)\right) / 2 h ∀ {y}_{i}$ where *h* is a stepsize. The above equations (16) and (17) use phase information around xₙ, with a greater distance for h > 1. With a greater distance and also with the including of more phase angle values in equation (17), noise effects may be reduced. The resulting values for the phase progression rates according to equations (2), (16) and (17) may differ from each other, and for equations (16) and (17) may also differ depending on the choice for *h*. However, if one equation is used for calculation of all the phase progression rates, as deviations between phase progression rates are evaluated anomalies may be detected in each case.

In some embodiments, the method may, for a sine-like modulation as mentioned above, further comprise combining squared pixel intensities of images having a phase shift of *π*/2 with respect to each other to form a first combined image, and detecting further anomalies based on the first combined image.

With this, in particular non-transparent anomalies may be detected.

A phase shift of *π*/2 corresponds to a relation between sine and cosine, where sin²(*x*) + *cos*²(*x*) = 1 holds. Therefore, without anomalies the combined squared pixel intensities of the images should have an essentially constant value, and deviations from this constant value, for example an average intensity value of the image, by more than an predefined threshold may indicate defects that reduce the intensity of the respective pixel, such defects may be transparent or non-transparent.

This kind of anomaly detection may also be used independently from the anomaly detection using phase progression rates, such that according to another aspect a method of anomaly detection for a lens implemented by a processor is provided, the method comprising:
combining squared pixel intensities of images of the lens illuminated with a pattern that has a sine-like periodic modulation a modulation direction and having a phase shift of *π*/2 with respect to each other to form a first combined image, and detecting anomalies based on the first combined image, for example based on deviations of pixel intensities of the first combined image from an average pixel intensity.

The following additions to this approach may be performed both when the combining of squared pixel intensities is performed in addition to the evaluation based on phase progression rate and when it is performed independently therefrom.

The method may further comprise forming the first combined images for a plurality of image pairs, the images in each image pair having a phase shift of *π*/2 with respect to each other, and where images of different image pairs are phase-shifted with respect to another, and combining the first images thus formed to a second combined image. The detection of anomalies may then be performed based on the second combined image. Pixel intensities of the second combined image may for example be a sum of the pixel intensities of the first combined images, or may be an average of the intensities, or a medium of the pixel intensities. In the above examples with eight images each being offset by *π*/4*,* if the images are numbered from 1 to 8, image pairs having a phase shift of *π*/2 with respect to another are images 1 and 3, images 2 and 4, images 3 and 5, images 4 and 6, images 5 and 7, images 6 and 8, images 7 and 1 and images 8 and 2, the latter one taking into account that the pattern is shifted by 2*π* is the original pattern again. The use of these second combined image corresponds to an averaging over a plurality of measurements (first combined images), which may increase the accuracy of detection.

As mentioned above, when the pattern is generated for example by a display, the lowest light intensity is zero (no light), such that for example a sine-like modulation is not about zero, but about some DC offset. In such cases, such a DC offset may be removed prior to the combining of the squared pixel intensities, to make full use of the trigonometric relationship. Offset may be removed based on combining images having a phase difference of *π*(180°), which for example corresponds to sin(x) and -sin(x), possibly with some phase difference. Subtracting one of the images from the other (i.e. subtracting the pixel intensities pixel-wise), then gives a result image with the DC offset removed and twice the modulation amplitude. In other embodiments, the DC offset may for example be obtained by calibration measurements and then subtracted from the images.

Furthermore, in case the light source used for generating the pattern, for example display, is not uniform regarding the maximum intensity, the images may be corrected based on calibration data.

This approach of combining squared intensities will be now further illustrated using the eight images phase offset *π*/4 with respect to each other also used as an example above.

Using again the numbering of images from 1 to 8, for the above-mentioned DC offset removal this means images 1 and 5 are shifted by *π* with respect to each other, images 2 and 6 are shifted by *π* with respect to each other, images 3 and 7 are shifted by *π* with respect to each other and images 4 and 8 are shifted by *π* with respect to each other. Taking *a* as a respective pixel value of a first image of each pair above and *a̅* as pixel value of the second image, subtraction results in $a - \overline{a} = \left(sin\left(x+Δϕ\right)+Δd\right) - \left(sin\left(x+Δϕ+π\right)+Δd\right) = sin \left(x+Δϕ\right) - sin \left(\begin{matrix}x + Δ ϕ + \\ π\end{matrix}\right) = sin \left(x+Δϕ\right) - \left(-sin\left(x+Δϕ\right)\right) = 2 sin \left(x+Δϕ\right)$

In the above equation (18), Δd is the DC offset, and Δ*ϕ* is the phase offset of the first image of each of the four image pairs above, i.e. Δ*ϕ* = 0 for the first pair, Δ*ϕ* = *π*/4 for the second pair, Δ*ϕ* = *π*/2 for the third pair and Δ*ϕ* = 3*π*/4 for the fourth pair.

Therefore, for the above example of eight images, four new images A, B, C, D result with the DC offset removed and phase offsets of 0, *π*/4*, π*/2, and 3*π*/4, respectively.

Of these four images, in this case image A and C have a phase shift of *π*/2 with respect to each other, and images B and D have a phase shift of *π*/2 with respect to each other. Therefore, these images are combined according to ${\left({p}_{aX , aY}\right)}^{2} + {\left({q}_{bX , bY}\right)}^{2} = 1 ∀ p ∈ A or B , q ∈ C or D , aX = bX , aY = bY$ the result being unity in the ideal case in a sine-like modulation, as ${sin}^{2} \left(x+Δϕ\right) + {sin}^{2} \left(x+Δϕ+\frac{π}{2}\right) = {sin}^{2} \left(x+Δϕ\right) + {cos}^{2} \left(x+Δϕ\right) = 1$

**In the above,** p are the intensity values of the respective pixel of image *A* or C, and *q* are the respective values for image C or *D.* And *aX, aY, bX, BY* are respective coordinates in the image. Therefore, values deviating from the ideal values of 1 for more than a predefined amount (for example 10%) indicate anomalies, in particular non-transparent defects. Also here, similar to the evaluation of the phase progression rates, local variances of the resulting intensity values of the combined image may be evaluated, or a machine learning approach may be used. In the machine learning approach, a machine learning logic may be trained with training data with known anomalies similar to what has been explained above, with the combined images as inputs to the machine learning logic and the known anomalies as target values for training.

According to a further aspect, an apparatus for anomaly detection of a lens is comprising a processor is provided, wherein the processor is configured to detect an anomaly based on a plurality of images of the lens illuminated with a pattern that is periodic in a modulation direction, wherein the pattern is phase-shifted from image to image.

The apparatus is characterized in that for the detecting of the anomaly, the processor is configured to:
- determine phase progression rates for a plurality of positions on the lens based on the plurality of images, and
- detect the anomaly based on deviations between the phase progression rates for different positions on the lens.

The processor may be configured to implement any of the above methods.

Furthermore, a computer program is provided, which, when executed on a computer, causes execution of any of the above methods. The computer program may be provided on a storage medium, in particular on a tangible storage medium like a flash memory, a hard disk, an ROM, a CD, DVD and the like. A data carrier signal carrying the computer program is also provided.

Correspondingly, also a data processing system comprising a processor and a storage medium is provided, wherein the computer program defined above is stored in the storage medium and, when executed, causes the processor to execute any of the methods outlined above.

The methods above, outside the computer-implemented part, further may include performing the measurement, by illuminating a lens with the pattern and capturing corresponding images. Likewise, the device may further comprise an illumination source for generating the pattern and a camera for capturing images of the lens illuminated with the patent may be provided.

Furthermore, a method for manufacturing a lens is provided, comprising:
- producing the lens, and
- detecting anomalies of the lens by any of the above methods.

In case an anomaly is detected, the lens may be discarded, inspected again by other means to determine if the anomaly can be remedied, cleaned to remove the anomaly if possible, or, in case the lens is a semifinished product or a reusable lens design such as a single vision lens or the like, the lens may be reused in another manufacturing job.

Embodiments will now be described referring to the attached drawings, wherein:
Fig. 1 is a flowchart of a method according to an embodiment,
Fig. 2 is a block diagram of a device according to an embodiment,
Fig. 3 is a diagram illustrating an implementation of the imaging device of Fig. 2,
Fig. 4 is a diagram for illustrating a periodic pattern usable in some embodiments,
Figs. 5A and 5B illustrate examples of images used in some embodiments,
Fig. 6 is a flowchart of a method according to a further embodiment,
Figs. 7A and 7B are diagrams illustrating the evaluation of phase progression rates in some embodiments,
Fig. 8 is a diagram of an image based on phase progression rates,
Fig. 9 is a diagram illustrating combination of phase progression rates for different modulation direction,
Fig. 10 is a diagram illustrating vector combination,
Fig. 11 is a flowchart illustrating a method according to a further embodiment, and
Fig. 12 is an example image which may result from the method of Fig. 11.

As mentioned above, the term 'lens' in the context of this invention, can refer to an ophthalmic lens used for vision correction of a person like a spectacle lens or a contact lens, or to an optical lens, optical lenses not being ophthalmic lenses, such optical lens can be used in consumer products such as lenses for microscopes, projectors, cameras or the like.

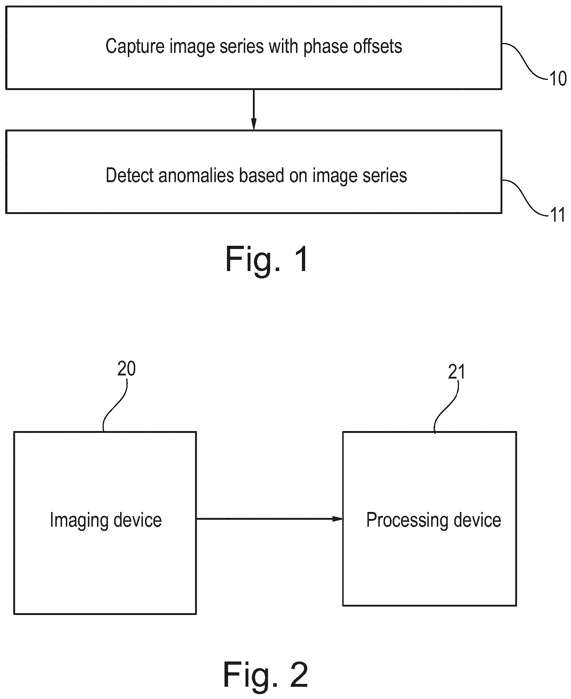

Fig. 1 is a flowchart illustrating a generic method for detecting anomalies in lenses, which is the basis for methods described in more detail below. In step 10, the method comprises capturing an image series where a lens is illuminated with a periodic pattern, which is periodic in a modulation direction. The phase of the periodic pattern is shifted from image to image, for example by *π*/4 as explained above. At step 11, the method comprises detecting anomalies based on the image series. As already explained above and as will be explained further below, the anomalies may be detected based on phase progression rates, combining of squared pixel intensities or combinations thereof. With such a detection based on phase progression rates or combining of squared pixel intensities, anomalies may be detected without the need of knowing the design of the lens (e.g. in form of a model) for the detection.

Fig. 2 illustrates a device according to an embodiment. The device of Fig. 2 comprises an imaging device 20 for capturing the image series of step 10, and a processing device 21 configured to detect anomalies based on the image series. Processing device 21 may be a computer and comprises one or more processors, a memory and other parts conventionally used in processing devices. In the device of Fig. 2, the method of Fig. 1 or the methods discussed further below may be implemented by programming processing device accordingly to process the image series captured by imaging device 20. In this way, a device for anomaly detection is implemented.

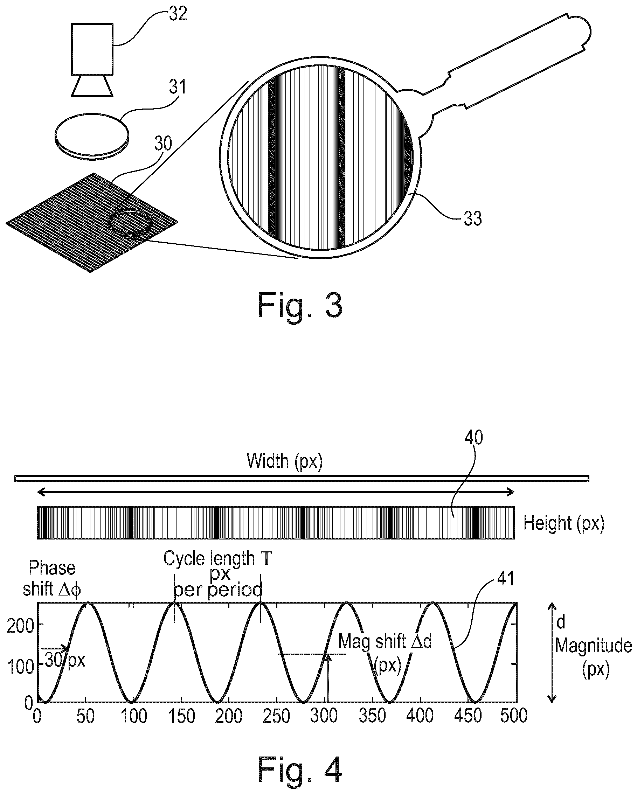

Fig. 3 illustrates an example of imaging device 20 of Fig. 2. Imaging device 20 comprises a display 30 for generating a sine-like pattern modulated in a modulation direction, as shown in a magnification insert 33. The pattern illuminates a lens 31, and the illuminated lines 31 is captured by a camera 32. A control (not shown in Fig. 3, may be implemented for example in processing device 21 of Fig. 2) controls the display 30 to phase-shift the periodic pattern, for example in the steps of *π*/4*,* as explained above, or to rotate the periodic pattern by 90° to have a periodic pattern with another modulation direction, as also explained above. Therefore, with the patterns thus captured, the methods described herein may be implemented.

Fig. 4 is a diagram illustrating the pattern further. The pattern and the resulting image may have a certain width in pixels and a height in pixels, which may be adapted to the size of the lens. This is shown in an image 40. A curve 41 shows the intensity magnitudes, where zero may correspond to black and the peaks at about 250 may correspond to white. The pattern has a cycle length T and may be phase-shifted from to image to image by a phase shift Δ*ϕ*, for example 30 pixels in the example of Fig. 4, which may correspond to a phase shift of *π*/4. The whole amplitude from maximum to minimum is denoted "magnitude d" in Fig. 4, and the average between the maximum and minimum as magnitude shift Δ*d*. This magnitude shift Δ*d* corresponds to the DC offset mentioned previously, such that the sinusoidal pattern has an amplitude of d/2 around Δ*d*.

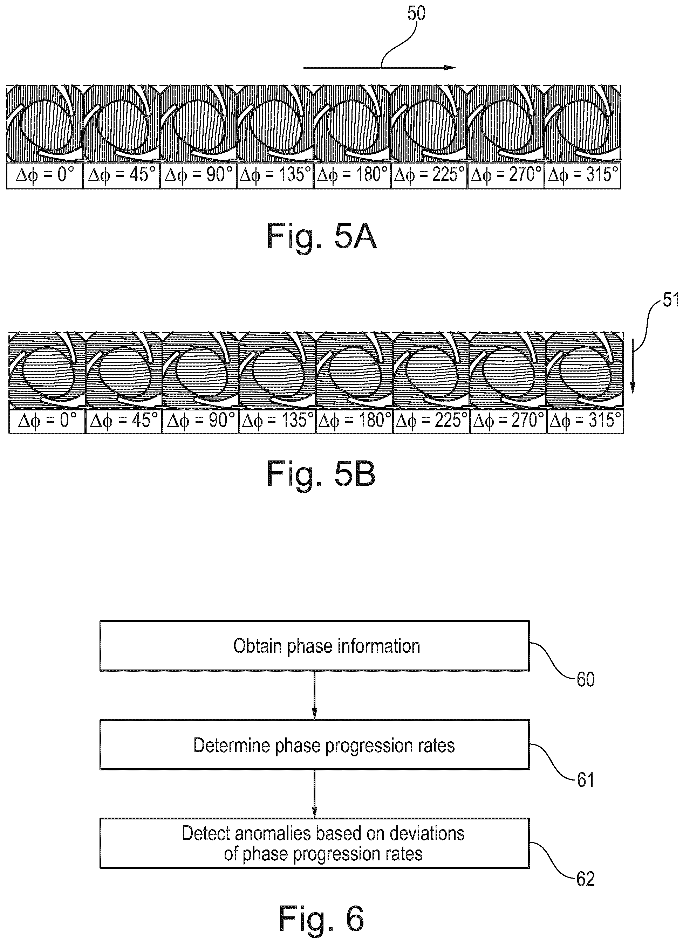

Figs. 5A and 5B show images at eight phase positions spaced apart by $\frac{π}{4} = 45 °$ of a lens with two perpendicular modulation directions, a horizontal modulation direction as indicated by an arrow 50 in case of Fig. 5A and a vertical modulation direction as indicated by an arrow 51 in case of Fig. 5B. In the middle of each of the images the lens is visible, held by three prongs as a lens holder, which are shown black (non-transparent) in the images. Such images may be used in the methods described below and will be used as examples when describing the methods.

Fig. 6 is a flowchart illustrating a method according to an embodiment, which is an implementation of step 11 of Fig. 1. In step 60, phase information is obtained based on the series of images. Taking the images of Figs. 5A and 5B as an example, for each modulation direction separately phase information is obtained. This may be achieved by a discrete Fourier transformation (DFT) over the 8 images of Fig. 5A for the first modulation direction or over the 8 images of Fig. 5B for the second modulation direction. The DFT is performed for each pixel at least for the area covered by the lens (the area outside the lens is not of interest for anomaly detection) over the 8 intensity values of that pixel in the 8 images. Performing a DFT over a plurality of images has a smoothing effect mitigating noise. When more images are used, this smoothing effect becomes stronger, but computational complexity increases. The use of 8 images is a good compromise between the smoothing effect and computational complexity, but more or less images may also be used. Phase information may then be obtained as phase angles for the Fourier coefficient corresponding to the modulation of the pattern, as described above. Alternatively, phase information may be obtained by direct calculation, as explained with respect to equations (11) to (15) above. Note that the phase information is calculated based on all images and therefore is a characteristic of a certain position (pixel) across all images and not for a specific image.

In step 61, phase progression rates are determined. These are calculated as differences between phase information obtained in step 60, for example as explained with respect to equations (2), (16) and (17) above. For the images of Figs. 5A the phase progression rate indicates the change of the phase information, e.g. phase angle, in the first modulation direction indicated by arrow 50, and for the images of Fig. 5B the change of phase information in the second modulation direction as indicated by arrow 51.

In step 62, anomalies are detected based on deviations of the phase progression rates. As explained above, it is assumed that phase progression rates vary only slightly locally, i.e. in a vicinity of a position, in case no anomalies are present. Greater deviations are indicative of anomalies and may be detected by calculating variances, or differences to mean values of surrounding phase progression rates, or may be detected by using a machine learning logic. By using the phase progression rates and the above assumption, no model or other information about the lens is required for anomaly detection.

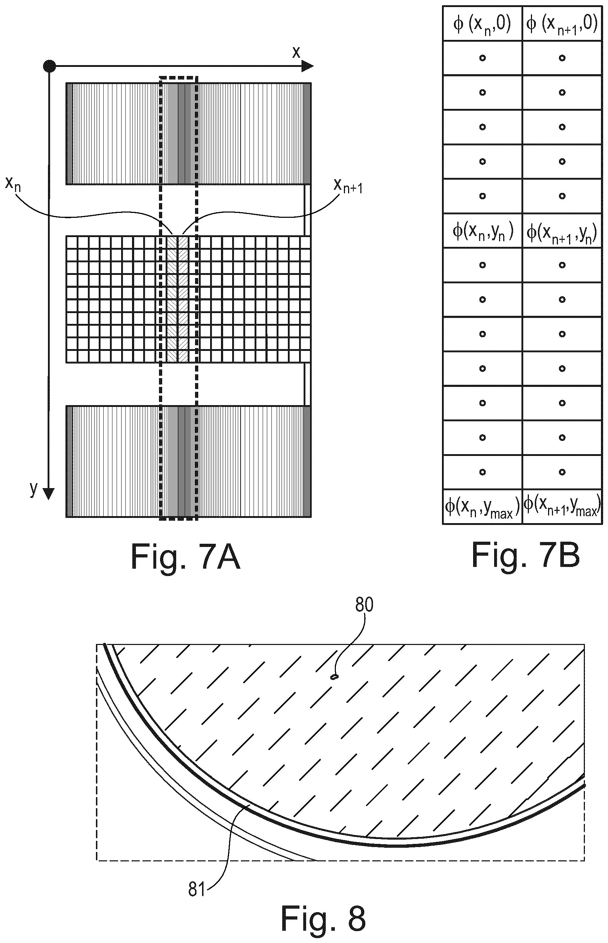

**Figs.7A,** 7B and 8 illustrate steps 61 and 62 further. Fig. 7A shows an example case with the modulation in the x-direction, as in Fig. 5A. Phases are calculated based on Fourier coefficients of a Fourier transform for pixel positions *xₙ* and *x*_{*n*+1} as illustrated in Fig. 7A. As given by equation (2) above, phase progression rates are approximated by differences between the values *ϕ*(*xₙ*) and *ϕ*(*x*_{*n*+1}) for each y, see also the table is shown in Fig. 7B. The thus calculated phase progression rates should be at least approximately constant, and significant deviations from this behavior, for example detected by calculating variances, indicates an anomaly.

Fig. 8 illustrates an image corresponding to the calculation of equation (9), where values of phase progression rates obtained for two modulation directions, for example first phase progression rates based on the images of Fig. 5A and second phase progression rates based on the images of Fig. 5B, have been combined. This combination is also described in more detail below referring to Fig, 9. By using two modulation directions, anomaly detection may be improved also for anomalies which are aligned with one particular modulation direction. Numeral 81 in Fig. 8 denotes the edge of the lens, which is clearly visible. At 80, the resulting value represented in black in the image differs significantly from the surrounding values, thus indicating a transparent defect.

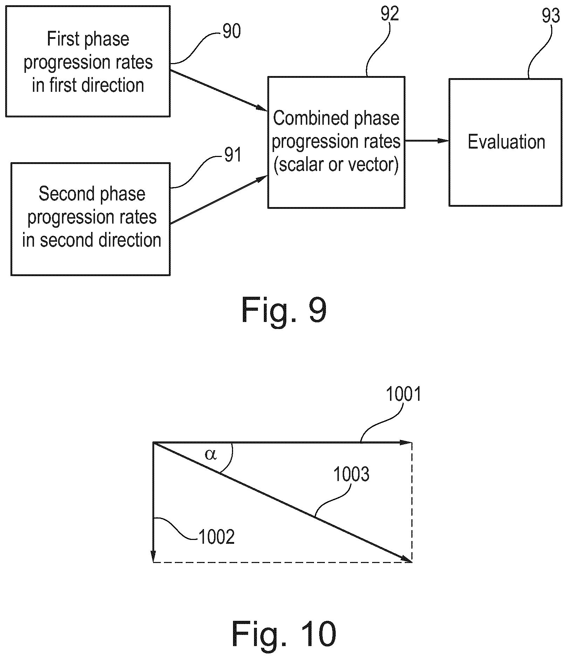

In an embodiment shown in Fig. 9, the combination of the phase progression rates for two modulation directions mentioned above is shown in more detail.

In Fig. 9, first phase progression rates 90, obtained for example based on the images of Fig. 5A, and second phase progression rates 91, obtained for example based on the images of Fig. 5B are combined to phase progression rates 92, which are evaluated at 93. In Fig. 8 above, this combination was made as in equation (9) above, resulting in a scalar value. In other embodiments, vector combination as illustrated in Fig. 10 may be used.

In Fig. 10, the first phase progression rate is used as a first vector component 1001, and the second phase progression rate is used as a second vector component 1002, leading to a vector 1003 as the combined phase progression rate. Vector 1003 may be described by its components 1001, 1002 or in polar coordinates by its magnitude (length), which corresponds to the scalar of equation (9), and angle α, which may be evaluated separately. In other embodiments, only the angle α or only the magnitude may be evaluated as a scalar value. Evaluating the angle α may facilitate the detection of certain anomalies causing a rotation of the vector compared to vectors of pixels in a vicinity of the anomaly with essentially constant magnitude.

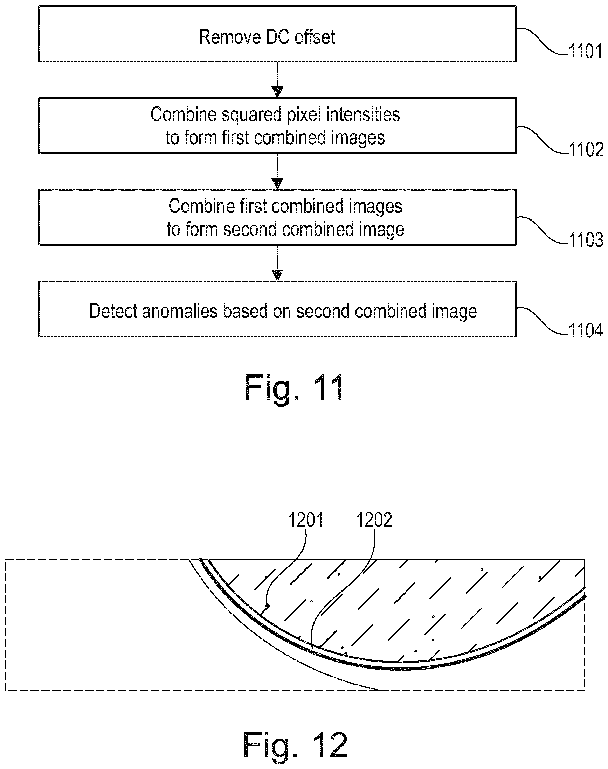

Fig. 11 illustrates a method according to a further embodiment. The method of Fig. 11 is another implementation of step 11 of Fig. 1, in which squared pixel intensities are combined and which may be used alone or in combination with the methods of fig. 6 and/or 9.

At 1101, a DC offset is removed from the images, by subtracting images with a phase difference of 180°=π, as explained with respect to equation (18) above. In case of Figs. 5A and 5B, image pairs with a phase shift of 180° useable for this subtraction are (Δϕ=0° and Δϕ =180°), (Δϕ=45° and Δϕ =225°), (Δϕ=90° and Δϕ =270°) and (Δϕ=135° and Δϕ =315°). In other words, in this way that the magnitude shift Δd in Fig. 4 is removed by simple operations, scaling the modulation to a sine-like modulation about 0 with positive and negative values.

At step 1102, squared pixel intensities are combined to form first combined images, where images (images generated by subtraction in step 1101 with DC offset removed) having a phase offset of 90°= *π*/2 are used, as explained with respect to equations (19) and (20) above. In the above example, a first combined images may be formed by adding the squared pixel intensities of the two images generated from the pairs (Δφ=0° and Δϕ =180°) and (Δϕ=90° and Δϕ =270°), or from the two images generated from the pairs (Δϕ=45° and Δϕ =225°) and (Δϕ=135° and Δϕ =315°).

Optionally, at step 1103 several first combined images may be combined to form a second combined image, for example the two first combined images mentioned as examples for step 1102. By using the second combined images, essentially an averaging of two or more first combined images is performed, which helps to reduce noise.

At step 1104 anomalies may be detected based on the second combined image if step 1103 is perfomed, and based on a first combined image of step 1102 otherwise. As explained above, through the combination at 1102 ideally all values are equal to one or equal to another constant value, caused by the combining of several first combined images or by a factor 2 as in equation (18), and therefore deviations from the constant value may indicate anomalies. In this way, in particular non-transparent anomalies may be detected.

Fig. 12 shows a corresponding image, where 1202 illustrates the lens edge, and black dots like at 1201 indicate non-transparent anomalies. As can be seen from the images in figs. 8, 10 and 12, in some embodiments for anomaly detection images may be provided and a user may annotate the anomalies, or in other embodiments the deviations from the expected values may be determined by processing device 21 of Fig. 2.

## Claims

1. A method configured for anomaly detection for a spectacle lens (31) implemented by a processor, the method comprising:
detecting an anomaly based on a plurality of images of the lens (31) illuminated with a pattern that is periodic in a modulation direction, wherein the pattern is phase-shifted from image to image, **characterized in that** the detecting of the anomaly comprises:
- determining phase progression rates for a plurality of positions on the lens (31) based on the plurality of images, and
- detecting the anomaly based on deviations between the phase progression rates for different positions on the lens.

2. The method of claim 1, **characterized in that** the determining the phase progression rates comprises determining phase information for a plurality of further positions in the plurality of images, and determining the phase progression rate for a position of the plurality of positions based on one or more differences between phase information for two or more further positions adjacent to the position.

3. The method of claim 2, **characterized in that** determining the phase progression rates for the plurality of positions comprises calculating differences between matrices, each matrix being derived from a base matrix by shifting or corresponding to the base matrix, where the phase information for the plurality of further positions is arranged in rows and columns.

4. The method of any one of claims 1 to 3, **characterized in that** detecting the anomaly based on deviations between the phase progression rates comprises calculating local variances of the phase progression rate, and detecting the anomaly if a value of the local variances exceeds a first predefined threshold.

5. The method of any one of claims 1 to 3, **characterized in that** detecting the anomaly based on deviations between the phase progression rates comprises detecting an anomaly if a phase progression rate at a first position of the plurality of positions differs from one or more phase progression rates at second positions adjacent to the first position by more than a second predefined threshold.

6. The method of any one of claims 1 to 4, **characterized by** performing the step of determining and at least once with a first modulation direction of the pattern to determine first phase progression rates (90) and at least once with a second modulation direction of the pattern different from the first modulation direction to determine second phase progression rates (91), and in that the method further comprises combining the first phase progression rates and the second phase progression rates to obtain the phase progression rates.

7. The method of claim 6, **characterized in that** combining the first phase progression rates and the second phase progression rates comprises determining the phase progression rates as vectors with the first phase progression rate (90) as first vector component (1001) and the second phase progression rate (91) as second vector component (1002), and **in that** detecting the anomaly based on deviations between the phase progression rates comprises detecting the anomaly based on deviations between at least one of the group consisting of a magnitudes of the vectors of the phase progression rates and angles of the vectors of the phase progression rates.

8. The method of any one of claims 1 to 7, **characterized in that** the phase shifts between two images having adjacent phase-shifts are π/4.

9. The method of any one of claims 1 to 8, **characterized in that** the modulation is a sine-like modulation, and **in that** the method further comprises combining squared pixel intensities of images having a phase shift of π/2 with respect to each other to form a first combined image, and detecting a further anomaly based on deviations of pixel intensities in the first combined image.

10. The method of claim 9, **characterized in that** the combining to form a first combined image is performed for a plurality of pairs of images having the a phase shift of π/2 to form a plurality of first combined images, wherein the method further comprises combining the plurality of first combined images to a second combined image, and detecting the further anomaly based on deviations of pixel intensities in the second combined image.

11. The method of claim 9 or 10, **characterized by** further comprising, before combining squared pixel intensities, removing a DC offset from the images.

12. The method of claim 11, **characterized in that** removing the DC offset comprises subtracting images having a phase shift of π, and using the results as images for the combining of squared pixel intensities.

13. An apparatus comprising a processor, the apparatus configured for anomaly detection of a spectacle lens, wherein the processor is configured to detect an anomaly based on a plurality of images of the lens (31) illuminated with a pattern that is periodic in a modulation direction, wherein the pattern is phase-shifted from image to image, **characterized in that** for the detecting of the anomaly, the processor is configured to:
- determine phase progression rates for a plurality of positions on the lens (31) based on the plurality of images, and
- detect the anomaly based on deviations between the phase progression rates for different positions on the lens.

14. A computer program comprising program code which, when carried out by a processor, causes execution of the method of any one of claims 1 to 12.

15. A method for manufacturing a spectacle lens (31), comprising:
- producing the lens, and
- detecting anomalies of the lens (31) by the method of any one of claims 1 to 12.
